(19) Europäisches Patentamt
European Patent Office
Office européen des brevets

(11) **EP 1 634 243 B1**

(12) **EUROPÄISCHE PATENTSCHRIFT**

(45) Veröffentlichungstag und Bekanntmachung des Hinweises auf die Patenterteilung:
**01.02.2012 Patentblatt 2012/05**

(21) Anmeldenummer: **04723512.2**

(22) Anmeldetag: **26.03.2004**

(51) Int Cl.:
*G01S 3/786* (2006.01)   *G01S 13/86* (2006.01)

(86) Internationale Anmeldenummer:
**PCT/DE2004/000635**

(87) Internationale Veröffentlichungsnummer:
**WO 2004/111943 (23.12.2004 Gazette 2004/52)**

(54) **VERFAHREN UND VORRICHTUNG ZUR OBJEKTORTUNG FÜR KRAFTFAHRZEUGE**

METHOD AND DEVICE FOR LOCATING OBJECTS FOR MOTOR VEHICLES

PROCEDE ET DISPOSITIF DE LOCALISATION D'OBJETS POUR DES VEHICULES A MOTEUR

(84) Benannte Vertragsstaaten:
**DE FR GB SE**

(30) Priorität: **30.05.2003 DE 10324895**

(43) Veröffentlichungstag der Anmeldung:
**15.03.2006 Patentblatt 2006/11**

(73) Patentinhaber: **ROBERT BOSCH GMBH**
**70442 Stuttgart (DE)**

(72) Erfinder: **BAEHRING, Dietrich**
**31134 Hildesheim (DE)**

(56) Entgegenhaltungen:
**EP-A- 1 126 414    WO-A-01/84844**
**WO-A-99/15406**

• **YAMADA K ET AL: "Image understanding based on edge histogram method for rear-end collision avoidance system" VEHICLE NAVIGATION AND INFORMATION SYSTEMS CONFERENCE, 1994. PROCEEDINGS., 1994 YOKOHAMA, JAPAN 31 AUG.-2 SEPT. 1994, NEW YORK, NY, USA,IEEE, 31. August 1994 (1994-08-31), Seiten 445-450, XP010136632 ISBN: 0-7803-2105-7**

**Beschreibung**

Stand der Technik

Die Erfindung betrifft ein Verfahren und eine Vorrichtung zur Objektortung für Kraftfahrzeuge.

Bei Kraftfahrzeugen werden zunehmend elektronische Fahrerassistenzsysteme eingesetzt, die den Fahrer bei der Führung des Kraftfahrzeugs unterstützen. Ein Beispiel eines solchen Fahrerassistenzsystems ist ein sogenanntes ACC-System (Adaptive Cruise Control), mit dem Geschwindigkeit des Fahrzeugs automatisch auf eine vom Fahrer gewählte Wunschgeschwindigkeit oder, sofern ein vorausfahrendes Fahrzeug verfolgt wird, auf einen angemessenen Sicherheitsabstand zu dem vorausfahrenden Fahrzeug zu regeln. Ein weiteres Beispiel eines Fahrerassistenzsystems ist ein Crash-Mitigation-System, das dazu dient, bei einer drohenden Kollision eine Warnmeldung an den Fahrer auszugeben und/oder automatisch in das Brems- und/oder Lenkungssystem des Fahrzeugs einzugreifen, um die Kollision abzuwenden oder deren Folgen zu mildern. All diese Systeme benötigen möglichst zuverlässige und genaue Informationen über objekte im Umfeld des Fahrzeugs, die als mögliche Hindernisse in Betracht kommen, insbesondere Informationen über die Orte, Bewegungen und möglichst auch die räumliche Ausdehnung von vorausfahrenden Fahrzeugen im Vorfeld des eigenen Fahrzeugs. In ACC-Systemen werden bisher zur Objektortung vorwiegend Ranging-Systeme (Radar oder Lidar) eingesetzt, die zwar eine genaue Messung von Abständen und Relativgeschwindigkeiten ermöglichen, aufgrund ihrer begrenzten Winkelauflösung jedoch nur unzureichende Information über die laterale Position und die laterale Ausdehnung der Objekte liefern. Eine andere bekannte Klasse von Ortungssystemen beruht auf der elektronischen Auswertung von Videobildern. Solche Videosysteme ermöglichen eine genaue Bestimmung der Lateralposition und der lateralen Ausdehnung der Objekte, sind jedoch relativ rechenaufwendig und liefern im Fall im monokularer Systemen keine unmittelbare Information über die Objektabstände. Auch bei Einsatz von aufwendigeren Stereosystemen ist eine Abstandsbestimmung mit hinreichender Genauigkeit allenfalls im Nahbereich möglich.

Angesichts der unterschiedlichen Stärken und Schwächen der verschiedenen Systeme ist bereits vorgeschlagen worden, Ranging-Systeme und Videosysteme miteinander zu kombinieren. In einem Aufsatz "Radar und Vision Data Fusion for Hybride Adaptive Cruise Control on Highways" von Hofman, Rieder und Dickmanns, Institut für Systemdynamik und Flugmechanik, Universität der Bundeswehr, München, in B.Schiele und G. Sagerer (Herausgeber): ICVS 2001, LNCS 2095, Seiten 125-138, Springer-Verlag Berlin/Heidelberg 2001, wird ein Hybridsystem beschrieben, bei dem das Radarsystem zur ersten Ortung des Objektes dient und dann die weitere Verfolgung des Objektes vornehmlich mit Hilfe des Videosystems geschieht. Für die Objektverfolgung (Tracking) wird auf Information über den Fahrbahnverlauf zurückgegriffen, die ebenfalls durch Auswertung des Videobildes gewonnen wird.

In einem Aufsatz "Robust car tracking using Kalman filtering and Bayesian templates", Frank Dellaert und C. Thorpe, Department of Computer Science and the Roboting Institute, Carnegie Mellon University, Pitsburgh, USA, wird ein Tracking-Verfahren beschrieben, bei dem ein monokulares Videobild mit Hilfe von Kalman-Filtern ausgewertet wird. Das verfolgte Objekt (Fahrzeug) wird durch eine rechteckige Begrenzungsbox beschrieben, die annähernd der Umrißkontur der Rückfront des Fahrzeugs entspricht. Für die Ersterkennung des Objektes wird ein sogenanntes Kantenbild ausgewertet, das aus dem Videobild abgeleitet ist, dessen Pixel jedoch nicht die Grauwerte des Bildes beschreiben, sondern Grauwertgradienten, also Hell/Dunkel-Unterschiede zwischen benachbarten Pixeln. Um die Begrenzungsbox für ein neues Objekt zu identifizieren, wird zunächst im Kantenbild nach waagerechten und senkrechten Konturlinien gesucht. Jede mögliche Kombination aus zwei waagerechten und zwei senkrechten Konturlinien definiert eine mögliche Begrenzungsbox.

Die realen, einem Fahrzeug entsprechenden Begrenzungsboxen werden dann durch Plausibilitätsauswertung identifiziert.

Ähnliche Verfahren zur Bildauswertung werden in WO 99/15406A, EP 1 126 414 a und US 2001/0031068 beschrieben.

Aus WO 03/001472 A ist ein Verfahren nach dem Oberbegriff des Anspruchs 1 bekannt. Dabei wird im zweidimensionalen Videobild zunächst ein Suchfeld bestimmt, in dem nach einem Objekt gesucht werden soll, das durch ein anderes Ortungssystem, beispielsweise ein Radarsystem, grob geortet wurde. Die vom Radarsystem gelieferte Winkelinformation gibt zumindest einen groben Anhalt für die Lage des Suchfeldes. Wahlweise kann auch die zweckmässige Grösse des Suchfeldes in Abhängigkeit von der vom Radarsystem bestimmten Objektentfernung gewählt werden.

Das Suchfeld wird dann nach einem vorgegebenen Bildmerkmal des Objektes durchsucht. Unter einem Bildmerkmal ist hier allgemein eine Struktur im Videobild oder einem daraus abgeleiteten Bild, z. B. dem Kantenbild zu verstehen, die für eine bestimmte Objektklasse charakteristisch ist. Ein Beispiel für ein Bildmerkmal ist etwa die typische, annähernd rechteckige Kontur der Rückansicht eines Pkw oder eines Lkw. Andere Beispiele für Bildmerkmale sind der charakteristische dunkle Schatten, der auch bei diffusem Licht typischerweise auf der Fahrbahnoberfläche unterhalb des Fahrzeugs vorhanden ist, oder die charakteristische Symmetrie von Strukturen eines Fahrzeugs bezüglich einer durch die Längsmittelachse des Fahrzeugs gehenden senkrechten Symmetrieebene.

Vorteile der Erfindung

Die Erfindung mit den in den unabhängigen Patentansprüchen angegebenen Merkmalen ermöglicht eine zuverlässige und robuste Objektortung und Objektverfolgung in Echtzeit mit reduziertem Rechenaufwand.

Bei dem erfindungsgemässen Verfahren wird beim Durchsuchen des Suchfeldes eine Maske, die eine vorgegebene Grundform aufweist, über das Suchfeld bewegt, und für jede Position der Maske im Suchfeld wird die Übereinstimmung zwischen dem Bildmerkmal und der Maske bewertet, d.h., es wird geprüft, in welchem Ausmaß die gesuchte Struktur innerhalb der Maske zu finden ist. Die Position der Maske, bei der sich eine maximale Übereinstimmung ergibt, liefert dann einen vorläufigen Wert für die Position des Objektes im Videobild.

Die vorgegebene Grundform der Maske ist an die jeweilige Objektklasse angepaßt. Beispielsweise kann die Maske bei der Suche nach einem Pkw die Form eines rechteckigen Rahmens haben, dessen Kantenverhältnis dem typischen Verhältnis von Höhe und Breite (der Begrenzungsbox) eines Pkw entspricht. Bei der Suche nach einem Lkw kann man entsprechend eine Maske mit einem anderen Kantenverhältnis verwenden. Der Ausdruck "vorgegeben" bezieht sich hier nur auf die Form der Maske, nicht auf ihre absolute Größe. Somit ist es im Rahmen der Erfindung möglich, die Maske in Abhängigkeit von der aus der Radarmessung bekannten Entfernung des Objektes so zu skalieren, daß die Größe der Maske jeweils zur scheinbaren Größe der Begrenzungsbox des Objektes paßt. Die zum Suchen verwendete Maske ist unscharf in dem Sinne, daß ein gewisses Maß an Übereinstimmung zwischen der Maske und dem Objekt auch dann noch erkannt wird, wenn die Maske und das Bildmerkmal nicht genau deckungsgleich sind.

Wenn auf diese Weise eine anfängliche Position der Maske und damit ein erster Schätzwert für die laterale Position des Objekts gefunden wurde (Initialisierung), wird in den nachfolgenden Verfahrensschritten die Suche nach Übereinstimmungen zwischen der Maske und dem Bildmerkmal verfeinert. Dazu wird in den aufeinanderfolgenden Bildern (frames) der Videobildfolge mit höherer räumlicher Auflösung geprüft, wie die für das Bildmerkmal charakteristischen Strukturen räumlich innerhalb der Maske verteilt sind. Die in den einzelnen Videobildern der Folge gefundenen Verteilungen werden akkumuliert, z.B. addiert oder integriert, so daß die gesuchten Strukturen mit zunehmender Beobachtungsdauer der Bildsequenz deutlicher und schärfer hervortreten und das Signal/Rausch-Verhältnis verbessert wird. Dabei ist natürlich zu berücksichtigen, daß sich aufgrund von Querbewegungen des Objektes die Position des Bildmerkmals im Videobild verschieben kann. Die Maske wird deshalb in geeigneten Intervallen nachgeführt, d.h., so verschoben, daß insgesamt die maximale Übereinstimmung zwischen dem Bildmerkmal und der unscharfen Maske erhalten bleibt. Gegebenenfalls kann es bei einer Verfolgung des Objektes über einen längeren Zeitraum aufgrund von Abstandsänderungen auch notwendig sein, die Skalierung der unscharfen Maske anzupassen.

In einem weiteren Schritt wird nun die Form der Maske gegenüber der ursprünglichen Grundform geändert und an die räumliche Verteilung der akkumulierten Bildmerkmale angepaßt. Wenn z.B. das gesuchte Bildmerkmal die Kontur eines Pkw ist und entsprechend als Maske ein rechteckiger, der Begrenzungsbox des Fahrzeugs entsprechender Rahmen verwendet wird, so wird bei dieser Anpassung die Breite des Rahmens so verändert, daß die akkumulierte Verteilung der Strukturen, die den linken Seitenrand des Fahrzeugs repräsentieren, ihr Häufigkeitsmaximum gerade in der Mitte des linken Rahmenschenkels der Maske hat und die Verteilung der Strukturen, die den rechten Fahrzeugrand kennzeichnen, ihr Häufigkeitsmaximum gerade in der Mitte des rechten Rahmenschenkels hat. Entsprechend kann wahlweise auch die Höhe der Maske angepaßt werden. Auf diese Weise erhält man eine Maske, die in Form und Lage optimal an das gesuchte Bildmerkmal angepaßt ist, also beispielsweise im Fall des Merkmals "Fahrzeugumriß" praktisch mit der Begrenzungsbox identisch ist. Aus der Lage dieser Maske im Videobild lassen sich dann die laterale Position und die Breite und wahlweise auch die Höhe des Objektes mit erheblich verbesserter Genauigkeit ablesen.

Bei der weiteren Verfolgung des Objektes wird nun die in ihrer Form angepaßte Maske der Bewegung des Objekts nachgeführt. Dabei kann gemäß einer Weiterbildung des Verfahrens die Unschärfe der Maske verringert werden, um die Anzahl der zu überprüfenden Pixel zu verringern und somit Rechenarbeit und -zeit zu sparen.

Wesentliche Vorteile dieses Verfahrens bestehen darin, daß die Initialisierung, also die anfängliche Ortung des Objektes dadurch vereinfacht und beschleunigt wird, daß nicht nur auf die Ortungsdaten des Radarsystems zurückgegriffen wird, sondern in der Form standadisierter, jeweils an die zu suchende Objektklasse angepaßter synthetischer Masken auch ein Vorwissen über die zu suchenden Objekte eingespeist wird. Besonders vorteilhaft ist dabei die Möglichkeit, diese standadisierten Masken anhand der bekannten Objektentfernung geeignet zu skalieren.

In der Praxis wird sich die Suche zumeist auf mehrere Objektklassen erstrecken, beispielsweise Pkw, Lkw und ggf. Zweiräder oder auch typische Standziele am Fahrbahnrand wie Leitplanken, Verkehrsschilder und dergleichen, die auf diese Weise mit größerer Sicherheit als irrelevante Objekte zu klassifizieren sind. Bei der Suche nach mehreren Objektklassen wird in der Initialiserungsphase das Suchfeld nacheinander mit mehreren Maske durchsucht, je einer für jede Objektklasse. Dabei kann man zweckmäßig mit der Maske beginnen, die zu der Objektklasse mit der größten Auftrittswahrscheinlichkeit (in der Regel Pkw) gehört. Wenn die Suche mit dieser Maske innerhalb des Suchfeldes nicht zu einem bestimmten Mindestmaß an Übereinstimmung führt, wird die Hypothese, daß das Objekt dieser Klasse angehört, verworfen, und die Suche wird mit der Maske für die nächste Objektklasse wiederholt.

Ein weiterer Vorteil der Erfindung besteht darin, daß man durch die Akkumulation der Bildmerkmale über einen bestimmten Zeitraum ein genaueres Maß für den Ort und die Ausdehnung des Objektes erhält.

Da sowohl in der Initialisierungsphase als auch später beim Nachführen der Maske die Übereinstimmung zwischen der Maske und dem Bildmerkmal berechnet und optimiert wird, läßt sich das jeweils erhaltene Ausmaß der Übereinstimmung mit geeigneter Normierung als Güteparameter verwenden, der Auskunft über die Verläßlichkeit des Ortungsergebnisses gibt.

Zeichnung

Ein Ausführungsbeispiel der Erfindung ist in den Zeichnungen dargestellt und in der nachfolgenden Beschreibung näher erläutert.

Es zeigen:

Figur 1 — ein Beispiel eines Videobildes, das nach dem erfindungsgemäßen Verfahren ausgewertet wird;

Figur 2 — ein Videobild entsprechend Figur 1, zu einem etwas späteren Zeitpunkt;

Figur 3 — ein Diagramm zur Erläuterung der Auswertung des Videobildes nach Figur 2;

Figur 4 — ein Videobild entsprechend Figur 2, zur Illustration des Auswertungsergebnisses nach längerer Objektverfolgung;

Figuren 5 und 6 — Beispiele von Masken für unterschiedliche objektklassen;

Figur 7 — ein Blockdiagramm der erfindungsgemäßen Vorrichtung; und

Figur 8 — ein Flußdiagramm zur Erläuterung des Verfahrens.

Beschreibung des Ausführungsbeispiels

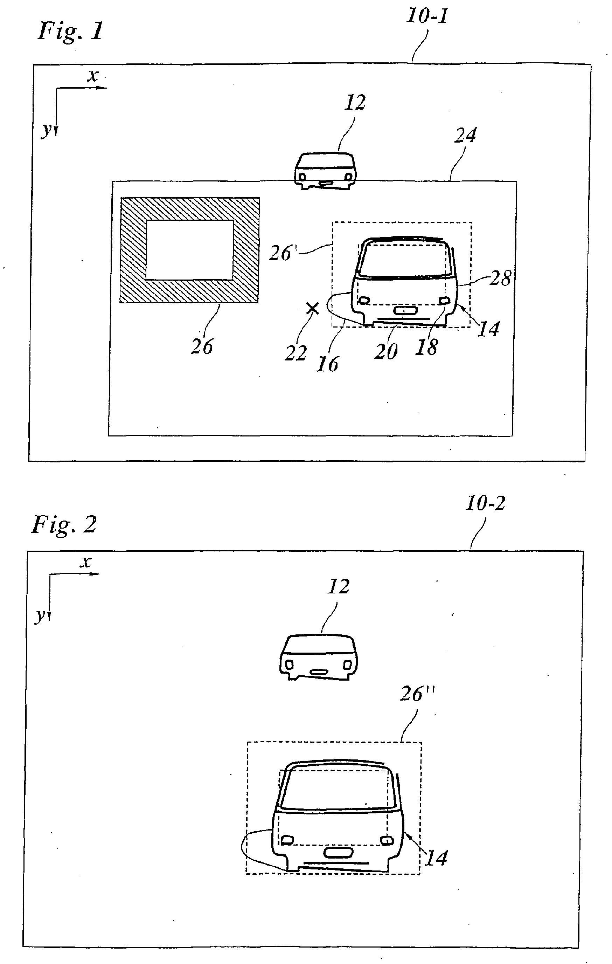

In Figur 1 ist als rechteckiger Rahmen die äußere Umrandung eines Videobildes 10-1 dargestellt, das mit Hilfe einer an Bord eines Kraftfahrzeugs montierten Videokamera aufgenommen wird. Die Kamera beobachtet das Vorfeld des Fahrzeugs. Dementsprechend zeigt das Videobild 10-1 im gezeigten Beispiel zwei vorausfahrende Fahrzeuge 12 und 14. Das Fahrzeug 12 befindet sich in größerer Entfernung und erscheint daher perspektivisch verkleinert.

Bei dem Videobild 10-1 handelt es sich im gezeigten Beispiel nicht um ein übliches Grauwertbild, sondern um ein sogenanntes Kantenbild, das lediglich die Objektkonturen wiedergibt und beispielsweise durch 3x3-Sobelfilterung gewonnen wird. Schwarze Pixel im Kantenbild geben die Orte von großen Gradienten, d.h., von großen Hell/Dunkel-Kontrasten im ursprünglichen Videobild an. Die Pixelwerte im Kantenbild können binär- oder mehrwertig sein. Im Prinzip kann jeder Pixelposition auch ein Gradientenvektor zugeordnet sein, der Betrag und Richtung des jeweiligen Helligkeitsgradienten angibt. Im gezeigten Beispiel geben die Pixel jedoch lediglich den Betrag des Gradienten an. Wahlweise könnten die Pixel auch nur die x-Komponente oder nur die y-Komponente des Gradienten angeben.

Bei dem Fahrzeug 14 ist neben den Umrissen des Fahrzeugs selbst auch die Kontur des Schattens 16 unterhalb und links neben dem Fahrzeug zu erkennen. Außerdem erkennt man die Kontur der Rücklichter 18 und des Nummernschilds 20.

Das Fahrzeug, auf dem die Videokamera montiert ist, weist außerdem einen winkelauflösenden Radarsensor auf, der zu einem ACC-System des Fahrzeugs gehört und ebenfalls das Vorfeld des Fahrzeugs beobachtet. Aufgrund des begrenzten Winkelauflösungsvermögens gibt der Radarsensor die laterale Position (x-Position) der Fahrzeuge 12, 14 aber nur mit begrenzter Genauigkeit wieder. Vom Fahrzeug 14 empfängt das Radarsystem im gezeigten Beispiel einen Hauptreflex, der vom linken Ende der Stoßstange herrührt. Aus dem Einfallswinkel dieses Reflexes und dem gemessenen Abstand des Fahrzeugs 14 kann das Radarsystem eine Fahrzeugposition 22 berechnen, die in Figur lin das Videobild 10-1 hineinprojiziert und durch ein "X" gekennzeichnet ist. Es ist zu erkennen, daß diese vermeintliche Fahrzeugposition mit einem beträchtlichen Fehler behaftet ist. Durch Auswertung des Videobildes 10-1 soll nun insbesondere die laterale Position (in x-Richtung) und auch die Breite und Höhe des Fahrzeugs genauer bestimmt werden. Aus der auf diese Weise bestimmten genaueren Fahrzeugposition läßt sich dann mit Hilfe des vom Radarsystem gemessenen Abstands die genaue Position und Ausdehnung des Fahrzeugs 14 in einem dreidimensionalen Weltkoordinatensystem berechnen.

Im gezeigten Beispiel soll angenommen werden, daß das Fahrzeug 14 gerade von rechts eingeschert ist. Da das Radarsystem nur einen kleinen Ortungswinkelbereich erfaßt hat, erkennt es das Fahrzeug 14 später als das Videosystem. Figur 1 zeigt den Zeitpunkt, in dem das Fahrzeug 14 erstmals vom Radarsystem geortet wurde. Dadurch wird nun das Videosystem veranlaßt, nach dem neu georteten Fahrzeug zu suchen. Zu diesem Zweck wird im Videobild 10-1 ein Suchfeld 24 definiert, das auf die vermutete, vom Radarsystem geortete Fahrzeugposition 22 zentriert ist. Das Suchfeld 24 ist ein Rechteck. Seine Größe und sein Kantenverhältnis können in Abhängigkeit vom gemessenen Objektabstand variiert werden. Ebenso kann auch die Verschiebung des Suchfeldes relativ zur Ortungsposition abstands- und/oder winkelabhängig verändert werden.

Da über die Natur des Radarobjekts (Fahrzeug 14) noch nichts bekannt ist, wird zunächst von der wahrscheinlichsten Hypothese ausgegangen, daß es sich um einen Pkw handelt. Um diesen Pkw im Videobild zu finden, wird nun das Suchfeld 24 mit einer unscharfen Maske 26 durchsucht. Die Maske 26 hat die Form eines rechteckigen Rahmens, dessen Kantenverhältnis dem typischen Verhältnis zwischen Höhe und Breite eines Pkw entspricht. Die Schenkel des Rahmens (schraffierte Fläche in Figur 1) haben eine gewisse Breite, so daß die x-Position der linken und rechten Rahmenschenkel und entsprechend die y-Position der oberen und unteren Rahmenschenkel nur mit einer gewissen Unschärfe definiert ist.

Anhand der bekannten Entfernung des Fahrzeugs 14 ist die Maske 26 so skaliert worden, daß ihre Größe mit der erwarteten Größe der Umrißlinie 28 des Fahrzeugs 14 übereinstimmt. Diese Umrißlinie 28 stellt hier ein Bildmerkmal dar, nachdem anhand eines geeigneten Matching-Kriteriums mit Hilfe der Maske 26 gesucht werden soll. Dazu wird das Suchfeld 24 systematisch mit der Maske 26 gescannt, d.h., die Maske 26 wird zeilenweise über das Suchfeld 24 bewegt. Die Schrittweite, in der die Maske jeweils in x- und y-Richtung verschoben wird, ist entweder fest oder vom Bildinhalt abhängig, der innerhalb der Maske 26 (d.h., innerhalb des schraffierten Gebietes) gefunden wird. Nach jeder Verschiebung der Maske werden die innerhalb der Maske liegenden Pixelwerte (Gradientenwerte) des Kantenbildes aufsummiert. Mathematisch entspricht dies einer Faltung des Kantenbildes mit der Maske. Auf diese Weise wird die Position der Maske 26 gesucht, in der die Umrißlinie 28 am besten mit der Maske 26 übereinstimmt, d.h., die Position, in der die Summe der innerhalb der Maske liegenden Gradienten maximal ist. Diese Position ist in Figur 1 gestrichelt eingezeichnet und mit 26' bezeichnet. Falls die gesamte Umrißlinie 28 des Fahrzeugs 14 innerhalb der Maske liegt, führen kleine Verschiebungen der Maske nicht mehr zu einer Änderung der Gradientensumme. In diesem Fall ist die optimale Position 26' der Maske dadurch definiert, daß die Umrißlinie 28 möglichst wenig von der Mitte der Rahmenschenkel der Maske abweicht.

Das andere Fahrzeug 12 war bereits früher vom Radarsystem geortet worden, und seine genaue Position ist auf analoge Weise bereits zuvor bestimmt worden. Damit die Suche nach dem Fahrzeug 14 nicht durch die Bilddaten des Fahrzeugs 12 behindert wird, ist es zweckmäßig, den vom Fahrzeug 12 eingenommenen Bereich, soweit er innerhalb des Suchfeldes 24 liegt, während der Suche auszublenden.

Die Videokamera erzeugt jeweils nach 40 ms ein neues Videobild. Im Idealfall sollte die oben beschriebene Suchprozedur innerhalb dieser Zeit abgeschlossen sein. Wahlweise kann sich die Prozedur jedoch auch über mehrere Bildzyklen erstrecken, insbesondere bei nahen, d. h. groß erscheinenden Objekten.

Figur 2 zeigt ein Videobild 10-2 aus derselben Videosequenz, das jedoch zu einem etwas späteren Zeitpunkt aufgenommen wurde. Das Fahrzeug 14 hat sich etwas nach links bewegt und erscheint außerdem etwas größer, weil auch sein Abstand abgenommen hat. Da sich das Fahrzeug 14 zwischen den Bildern 10-1 und 10-2 aber nur wenig bewegt hat, kann in Bild 10-2 das Suchfeld erheblich eingeschränkt werden, nämlich auf die engere Umgebung der Position 26' in Figur 1. Bei der Suche in Figur 2 wird erforderlichenfalls die Maske 26 entsprechend dem geänderten Abstand des Fahrzeugs 14 neu skaliert, und durch eine Suchprozedur, die abgesehen von dem kleineren Suchfeld zu der oben beschriebenen Prozedur analog ist, wird nun die Position 26'' für die Maske bestimmt. Auf entsprechende Weise wird die Position der Maske 26 für jedes nachfolgende Bild der Bewegung des Fahrzeugs 14 nachgeführt. Die dafür jeweils benötigte Rechenzeit ist kleiner als die Zeit, die für die erste Auswertung in Figur 1, die sogenannte Initialisierungsphase, benötigt wird. Spätestens nach Abschluß der Initialisierung kann somit die Auswertung in Echtzeit erfolgen.

Um das Nachführen der Maske zu vereinfachen und zu beschleunigen, kann auch auf Information aus anderen Quellen zurückgegriffen werden, insbesondere auf die Ortungsdaten des Radarsystems. Ein Beispiel für eine effiziente Fusion der Bilddaten mit den Radardaten wird in der gleichzeitig mit dieser Anmeldung eingereichten deutschen Patentanmeldung desselben Erfinders mit dem Titel: "Verfahren und Vorrichtung zur Objektbestimmung in Fahrerassistenzsystemen für Kraftfahrzeuge" beschrieben.

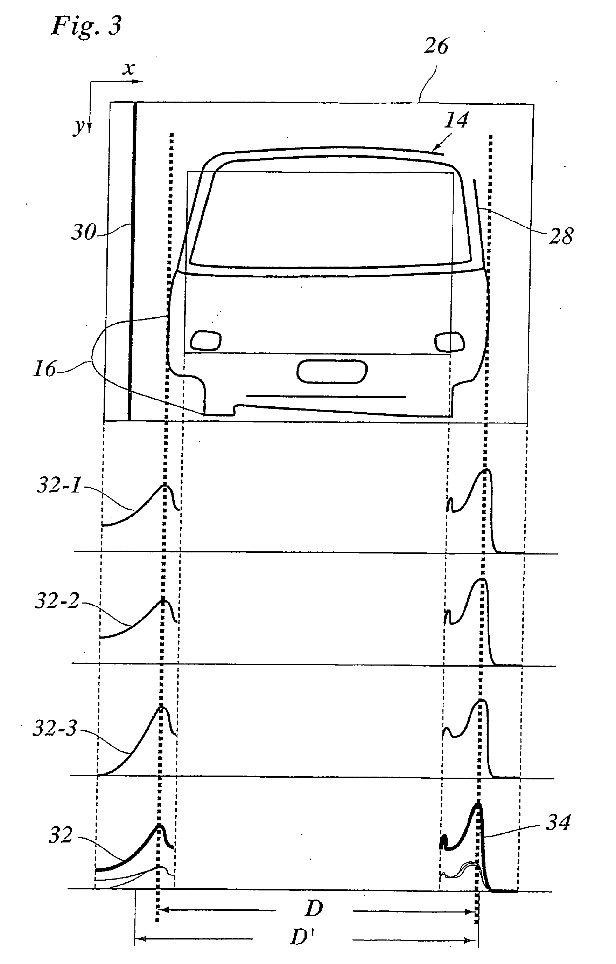

Im weiteren Verlauf des Verfahrens wird nun die genaue Lage, Form und Größe der Umrißlinie 28 des Fahrzeugs 14 näher bestimmt. Dazu wird ein Verfahren benutzt, das anhand von Figur 3 näher erläutert werden soll.

Figur 3 zeigt das Kantenbild des Fahrzeugs 14, insbesondere dessen Umrißlinie 28 sowie die geeignet nachgeführte Maske 26. Um die genaue Lage des linken Randes der Umrißlinie 28 in Bezug auf die Maske 26 genauer zu bestimmen, werden im linken Rahmenschenkel der Maske 26 jeweils die auf einer Pixelspalte 30 liegenden Gradienten aufsummiert. Im gezeigten Beispiel ist dieser Gradient nur an zwei Stellen von 0 verschieden, nämlich dort wo der Rand des Schattens 16 die Pixelspalte 30 schneidet. Das Ergebnis der Summation wird an der entsprechenden x-Position in ein Histogramm 32-1 eingetragen. Dies wird für jede Pixelspalte innerhalb des linken Rahmenschenkels der Maske 26 wiederholt. Das so erhaltene Histogramm 32 gibt somit eine Häufigkeitsverteilung des Gradienten im linken Rahmenschenkel an. Das Maximum dieser Häufigkeitsverteilung, in Figur 3 durch eine fette gestrichelte Linie repräsentiert, gibt nun mit größerer Genauigkeit die linke Grenze des Fahrzeugs 14 an. Auf die gleiche Weise wird auch die rechte Grenze des Fahrzeugs 14 näher bestimmt, und analog werden auch die oberen und unteren Begrenzungen des Fahrzeugs bestimmt (in Figur 3 nicht gezeigt).

In der Praxis werden die auf diese Weise erhaltenen Begrenzungen des Fahrzeugs 14 jedoch noch mit einem beträchtlichen Fehler behaftet sein, da das Gradientenbild zumeist mehr oder weniger verrauscht ist. Um den Einfluß dieses Rauschens zu unterdrücken, wird die beschriebene Prozedur für jedes nachfolgende Videobild wiederholt, so daß man nacheinander Histogramme 32-2, 32-3 usw. erhält. Erforderlichenfalls wird zwischendurch, vorzugsweise in größeren Intervallen, die Maske 26 entsprechend der Bewegung des Fahrzeugs 14 nachgeführt. Ebenso wird erforderlichenfalls, vorzugsweise in noch größeren Intervallen, die Maske 26 neu skaliert. Dabei werden die Histogramme 32-1 etc. entsprechend mit skaliert.

Die auf diese Weise über einen längeren Zeitraum aufgenommenen Histogramme 32-1, ... (beispielsweise 5 bis 6 aufeinanderfolgende Histogramme) werden akkumuliert und normiert, so daß man letztlich ein kaum noch durch Rauschen verfälschtes Histrogramm 32 erhält. Diese Akkumulation erfolgt vorzugsweise fortlaufend nach dem Fading-Memory-Prinzip. Das heißt, es wird fortlaufend die Summe der zuletzt aufgenommenen Histogramme gebildet, jedoch werden die jüngeren Histogramme jeweils stärker gewichtet als die älteren, so daß die "Erinnerung" an die weiter zurückliegenden Histogramme nach und nach verblaßt. Diese Akkumulation kann z.B. nach der Formal

$$H(x)_{n+1} = (k-1)H(x)_n + k \cdot H(x)_{neu}$$

erfolgen. Darin ist $H(x)_{neu}$ das letzte, für das letzte Videobild aufgenommene Histogramm, also die Gradientensumme über die Pixelspalte 30 aus dem letzten Videobild, $H(x)_n$ ist das alte akkumulierte Histogramm, $H(x)_{n+1}$ ist das neue akkumulierte Histogramm, und k ist ein sogenannter Fading-Faktor, der zwischen 0 und 1 liegt.

Etwas allgemeiner läßt sich die beschriebene Prozedur wie folgt darstellen: Das Bildmerkmal, hier die Umrißlinie 28 im Gradientenbild, wird repräsentiert durch die innerhalb der Maske 26 gefundenen Gradienten. Nach der Initialisierung wird die Übereinstimmung dieses Bildmerkmals mit der unscharfen Maske 26 mit höherer räumlicher Auflösung bestimmt (z.B. indem für die linken und rechten Ränder der Umrißlinie 28 über die Pixelspalten 30 summiert wird und entsprechend für die oberen und unteren Ränder über Pixelzeilen). Die so mit höherer räumlicher Auflösung aufgenommenen Bildmerkmale werden nun über mehrere Videobilder akkumuliert, so daß man genauere Koordinatenwerte für die Lage des Bildmerkmals (Umrißlinie 28) relativ zur unscharfen Maske 26 erhält. So ist z.B. die genaue Breite D des Fahrzeugs 14 durch den in x-Richtung gemessenen Abstand zwischen dem Maximum des Histogramms 32 und dem Maximum des entsprechenden Histogramms 34 für den rechten Rahmenschenkel der Maske gegeben.

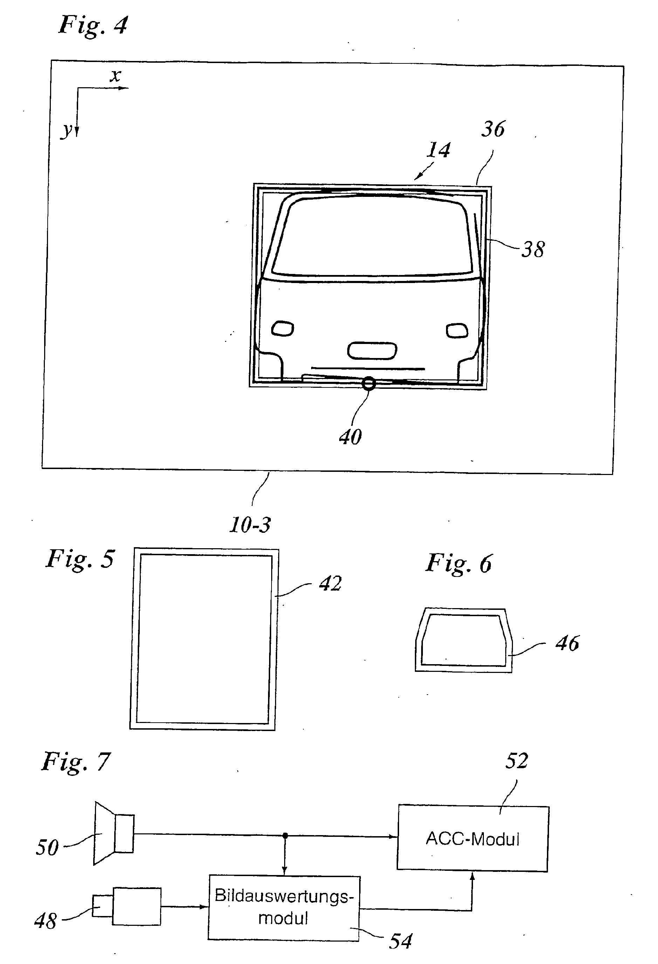

Man erkennt in Figur 3, daß dieser Abstand D kleiner ist als der Mittenabstand D' der linken und rechten Rahmenschenkel der Maske 26. Die ursprünglich benutzte Pkw-Standardmaske ist somit für das spezielle Fahrzeug 14 etwas zu groß und gibt nicht die genauen Proportionen dieses Fahrzeugs wieder. Sobald die Histogramme 32 und 34 hinreichend genau bestimmt worden sind, wird dieser Fehler korrigiert, indem die Breite (Mittenabstand D') der Maske an den gemessenen Abstand D angepaßt wird. Auf entsprechende Weise wird auch die Höhe der Maske angepaßt. Für die nachfolgenden Videobilder, beispielsweise das Videobild 10-3 in Figur 4, hat man somit eine neue Maske 36 zur Verfügung, die speziell an das betreffende Fahrzeug 14 angepaßt ist und mit der rechteckigen Begrenzungsbox 38 dieses Fahrzeugs zusammenfällt. Die Lage dieser Maske 36 im Videobild 10-3, genauer, die x- und y-Koordinaten des Mittelpunktes 40 des unteren Rahmenschenkels der Maske 36, stellen nun ein präzises Maß für die Position, insbesondere die Lateralposition, des Fahrzeugs 14 im zweidimensionalen Videobild dar. Mit Hilfe dieser Position und des durch Radarmessung bekannten Abstands des Fahrzeugs 14 läßt sich nun der Ort des Fahrzeugs 14 im dreidimensionalen Weltkoordinatensystem genau bestimmen, z. B. durch perspektivische Rückprojektion dieses Punktes in Weltkoordinaten.

Darüber hinaus liefern die Breite und Höhe der Maske 36 genaue Werte für die Breite und Höhe des Fahrzeugs 14. Diese Information erleichtert die Verfolgung und das Wiedererkennen des Fahrzeugs 14, beispielsweise in Situationen, in denen das Fahrzeug 14 vorübergehend durch ein anderes Fahrzeug verdeckt wird. Die Information über die Breite des Fahrzeugs ist auch bei einem Crash-Mitigation-System nützlich, um den Kurs des eigenen Fahrzeugs zu berechnen, der zur Kollisionsvermeidung erforderlich ist. Die Information über die Höhe des Fahrzeugs kann auch dazu benutzt werden, den Fahrzeugtyp näher zu spezifizieren und im Kollisionsfall die Auslösung von Airbags an die Größe des Fahrzeugs anzupassen. Desweiteren wird generell die Verifikation eines georteten Objekts als relevantes Hindernis durch die genaue Bestimmung der Abmessungen dieses Objekts wesentlich erleichtert und verbessert.

Aufgrund der besseren Anpassung der Maske 36 an die Geometrie des Fahrzeugs 14 ist es nun auch möglich, die Unschärfe der Maske 36, d.h., die Breite der Rahmenschenkel, zu reduzieren. Auf diese Weise kann bei der weiteren Verfolgung des Fahrzeugs die Rechenarbeit bei den anhand von Figur 3 beschriebenen Prozeduren wesentlich verringert werden.

Bei der weiteren Verfolgung des Fahrzeugs 14 wird die Maske 36 fortlaufend angepaßt. Dabei können auch Plausibilitätskriterien berücksichtigt werden, etwa das Kriterium, daß sich die Form des Fahrzeugs nicht sprunghaft ändern kann.

Gemäß einer Weiterbildung ist es auch denkbar, den durch die Maske 36 definierten Bildbereich aus dem Videobild auszuschneiden und alsdann diesen gesamten Bildbereich (also nicht nur den Rahmen) als Maske (Template) für ein verfeinertes Matching-Kriterium zu benutzen.

Aufgrund der hohen Zuverlässigkeit des Ortungsverfahrens kann das Fahrzeug 14 selbst dann noch verfolgt werden, wenn es vorübergehend aus dem Ortungsbereich des Radarsensors auswandert oder wenn das Radarsignal aus anderen Gründen verloren geht.

Die in Figur 3 gezeigten Histogramme 32 und 34 liefern darüber hinaus ein Maß für die Güte der Objekterkennung, d.h., für das Ausmaß der Übereinstimmung der tatsächlichen Fahrzeugkontur mit der Maske 26 bzw. 36. Im Idealfall, wenn die Rückansicht des Fahrzeugs 14 eine exakte Rechteckform hätte, erhielte man für die Summe der Maxima der Histogramme 32 und 34 den größten theoretisch möglichen Wert. Das Verhältnis zwischen der Summe der Höhe der tatsächlich gemessenen Maxima und diesem theoretischen Wert liefert somit einen Gütefaktor G zwischen 0 und 1, der die Güte der Anpassung der Maske an das Objekt beschreibt. Daraus lassen sich bei der weiteren Auswertung Rückschlüsse ziehen, wie verläßlich die erhaltenen Werte für die Lateralposition und die Breite des georteten Fahrzeugs sind.

Die Grundform der in der Initialisierungphase verwendeten Masken kann in vielfältiger Weise an die gewünschten Objektklassen angepaßt werden. Als Beispiel zeigt Figur 5 die Grundform einer Maske 42 für Lkw. Figur 6 zeigt eine Grundform einer Maske 44, die noch besser an die typische Kontur von Pkw angepaßt ist. Entsprechend sind auch Masken für Zweiräder, für Verkehrsschilder und dergleichen denkbar. Noch exaktere Masken lassen sich aus einer Vielzahl manuell bestimmter Fahrzeugansichten generieren, zum Beispiel durch Lernverfahren (z. B. Self Organizing Feature Maps) oder durch statistische Methoden (z. b. Principal Component Analysis).

Für Fahrten bei Dunkelheit oder bei schlechter Sicht können auch Masken vorgesehen sein, die an das charakteristische Muster der Rückleuchten eines Pkw oder Lkw oder an das Muster aus Rückleuchten und beleuchtetem Nummernschild angepaßt sind. Je nach Sichtbedingungen wird man dann beispielsweise für Pkw entweder die Maske 26 oder 46 für das Merkmal "Umrißlinie 28" oder eine Maske für das Merkmal "Rücklichter" verwenden. Die Umschaltung zwischen den Merkmalstypen kann ggf. auch automatisch erfolgen, etwa mit Hilfe eines Umgebungslichtsensors oder wenn am Tage bei Nebel die Initialisierung mit dem Merkmal "Umrißlinie" nicht gelingt.

Als weitere Merkmale, die sich für das erfindungsgemäße Verfahren eignen, kommt auch der Schatten unterhalb des Fahrzeugs in Betracht, der entweder im Grauwertbild oder im Kantenbild ausgewertet werden kann, ebenso die charakteristische Rechts/Links-Symmetrie von Fahrzeugen. Die Auswertung von Kantenbildern kann auch dadurch verfeinert werden, daß nicht nur der Betrag, sondern auch die Richtung des Gradienten ausgewertet wird. Dazu würden dann Masken benutzt, die beispielsweise für die linken und rechten Ränder des Fahrzeugs nach Gradienten mit entgegengesetzten Richtungen suchen.

Figur 7 zeigt den allgemeinen Aufbau einer Vorrichtung zur Durchführung des oben beschriebenen Verfahrens. Als Ortungssysteme sind eine Videokamera 48 und ein Radarsensor 50, beispielsweise ein winkelauflösendes FMCW-Radar vorgesehen. Die Ortungssignale des Radarsensors 50 werden in bekannter Weise in einem ACC-Modul 52 ausgewertet, um den Abstand zu einem vorausfahrenden Fahrzeug zu regeln. Das durch diese Teilkomponenten gebildete System ist auch dann funktionsfähig, wenn aufgrund schlechter Sicht oder eines Fehlers kein Bild von der Videokamera 48 zur Verfügung steht. Bei normalen Sichtverhältnissen wird das von der Kamera 48 aufgenommene Videobild an ein Bildauswertungsmodul 54 übermittelt, das durch einen Mikroprozessor oder ein anderes elektronisches Datenverarbeitungssystem gebildet wird und die oben beschriebenen Funktionen ausführt. Dazu erhält das Bildauswertungsmodul 52 auch die Ortungssignale des Radarsensors 50. Das Ergebnis der Bildauswertung, also die Orte und Abmessungen der georteten Objekte werden dem ACC-Modul als Ergänzungsinformation zur Verfügung gestellt.

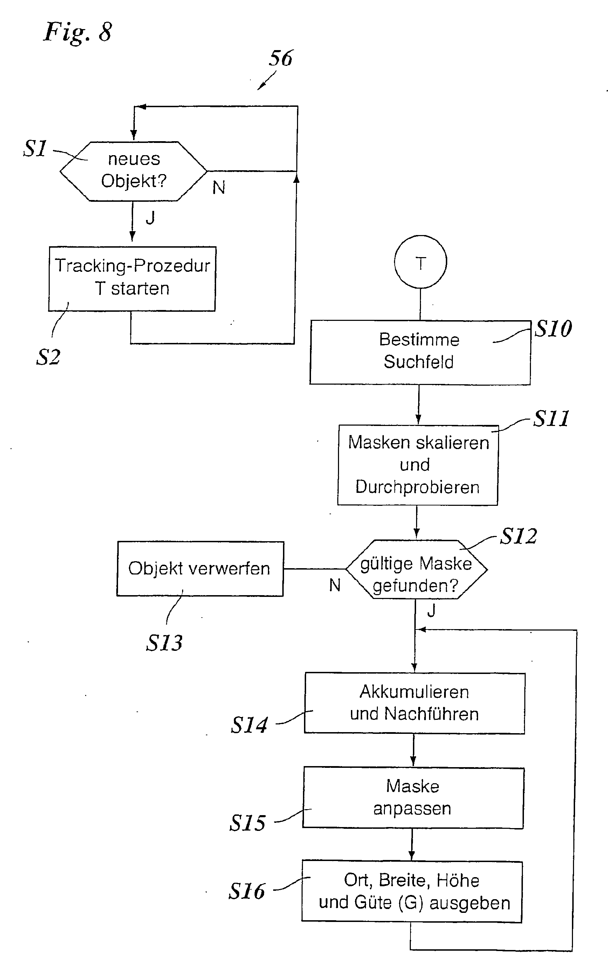

In Figur 8 ist die Arbeitsweise des Bildauswertungsmoduls 52 anhand eines Flußdiagramms erläutert. Ein Überwachungsmodul 56 überprüft in regelmäßigen Zeitabständen in Schritt S1 anhand der Ortungssignale des Radarsensors 50, ob ein neues Objekt festgestellt wurde. Wenn dies der Fall ist, wird in Schritt S2 eine Tracking-Prozedur T gestartet. Die Tracking-Prozedur beginnt mit einem Schritt S10, in dem anhand der Daten des Radarsensors das Suchfeld 24 bestimmt wird. Danach werden in Schritt S11 die Standardmasken für die verschiedenen Objekte, beispielsweise die Maske 26 für Pkw und die Maske 42 für Lkw, entsprechend dem gemessenen Objektabstand skaliert, und das Suchfeld 24 wird nacheinander mit diesen Masken durchsucht. Wenn mit der Maske 26 keine ausreichende Übereinstimmung gefunden wird, d.h., wenn das Ergebnis der Faltung des Kantenbildes mit der Maske an keiner Stelle im Suchfeld einen bestimmten Schwellenwert überschreitet, so wird die Suche mit der Maske 42 für Lkw wiederholt. Falls der Radarsensor 50 mehrere Signale empfängt, die den gleichen objektabstand und die gleiche Relativgeschwindigkeit aufweisen und somit vermutlich demselben Objekt zuzuordnen sind, kann u.U. schon anhand der Winkelverteilung dieser Objekte darauf geschlossen werden, daß es sich um einen Lkw handelt. In diesem Fall kann die Suche auch gleich mit der Maske 42 für Lkw begonnen werden. Wenn nach dem Durchsuchen sämtlicher Masken keine gültige Maske gefunden wurde (Schritt S12), so wird das vermutete Objekt in Schritt S13 verworfen, d.h., es wird angenommen, daß sich das Radarecho nicht auf ein Fahrzeug bezieht, sondern beispielsweise ein Radarziel am Fahrbahnrand repräsentiert.

Wenn in Schritt S12 eine gültige Maske gefunden wurde, so ist die Initialisierungsphase beendet, und mit Schritt S14 beginnt die eigentliche Tracking-Prozedur, d.h., das Nachführen der Maske entsprechend der Bewegung des Fahrzeugs. Im Verlauf dieser Nachführung werden die Bildmerkmale in der in Figur 3 illustrierten Weise akkumuliert. In Schritt S15 wird dann die Maske an das akkumulierte Bildmerkmal (Histogramme 32, 34) angepaßt, d.h., es wird von der Maske 26 auf die Maske 36 übergegangen. In Schritt S16 werden dann die Ergebnisse, also der Ort, die Breite und die Höhe des Fahrzeugs sowie der Gütefaktor G ausgegeben. Danach erfolgt ein Rücksprung zu Schritt S14, und die aus den Schritten S14 und S15 und S16 bestehende Schleife wird so lange wiederholt, bis das Objekt endgültig verlorengeht.

**Patentansprüche**

1. Verfahren zur Ortung und Verfolgung von Objekten (14) durch elektronische Auswertung einer Videobildfolge an Bord eines Kraftfahrzeugs, mit den folgenden Schritten:

   - Bestimmen eines Suchfeldes (24) im Videobild (10-1) anhand von Ortungsdaten, die mit einem anderen Ortungssystem (50) gewonnen werden, und
   - Durchsuchen des Suchfeldes (24) nach einem vorgegebenen, durch charakteristische Strukturen gekennzeichneten Bildmerkmale (28) des Objekts (14),
   **dadurch gekennzeichnet, daß**:

   a) das Suchfeld (24) durchsucht wird, indem eine dem Bildmerkmal entsprechende unscharfe Maske (26), die eine vorgegebene Grundform aufweist, über das Suchfeld bewegt wird, bis anhand eines Matching-Kriteriums optimale Übereinstimmung zwischen dem Bildmerkmal und der Maske festgestellt wird,
   b) die Maske (26) in den nachfolgenden Bildern (10-2,10-3) der Videobildfolge entsprechend der Bewegung des Objekts (14) nachgeführt wird, wobei in den aufeinanderfolgenden Bildern der Videobildfolge mit höherer räumlicher Auflösung geprüft wird, wie die für das Bildmerkmal charakteristischen Strukturen räumlich innerhalb der Maske verteilt sind, und wobei die in den einzelnen Videobildern der Folge gefundenen Verteilungen akkumuliert werden,
   c) die Form der Maske (26 ; 36) im Sinne einer Optimierung der Übereinstimmung mit den akkumulierten Verteilungen angepasst wird und
   d) der Schritt (b) mit der angepassten Maske (36) wiederholt wird.

2. Verfahren nach Anspruch 1, **dadurch gekennzeichnet, dass** in Schritt (a) die Maske (26) in Abhängigkeit von dem mit Hilfe des anderen Ortungssystems (50) gemessenen Abstands des Objekts (14) skaliert wird.

3. Verfahren nach Anspruch 1 oder 2, **dadurch gekennzeichnet, dass** der Schritt (a) nacheinander mit mehreren Masken (26,42) durchgeführt wird, und dass der Übergang zu Schritt (b) nur dann erfolgt, wenn für eine Maske ein bestimmtes Mindestmass an Übereinstimmung gefunden wurde.

4. Verfahren nach einem der vorstehenden Ansprüche, **dadurch gekennzeichnet, dass** das Bildmerkmal (28) eine Umrisslinie des Objekts (14) ist, dass die unscharfe Maske (26) die Form eines Rahmens aufweist, dessen Schenkel eine der Unschärfe entsprechende Breite haben, und dass die Übereinstimmung zwischen dem Bildmerkmal (28) und der Maske (26) bestimmt wird, indem das Videobild als Kantenbild berechnet und mit der Maske gefaltet wird.

5. Verfahren nach Anspruch 4, **dadurch gekennzeichnet, dass** die Maske (26) mindestens zwei parallele Rahmenschenkel hat, die in einer Koordinatenrichtung x in Abstand zueinander liegen, dass in Schritt (b) die Akkumulation der Bildmerkmale bei höherer räumlicher Auflösung dadurch erfolgt, dass in den beiden parallelen Rahmenschenkeln für jede x-Koordinate das Kantenbild über komplette Pixelspalten integriert wird, so dass man ein Histogramm (32, 34) des Bildmerkmals in Abhängigkeit von der x-Koordinate erhält, und dass die in den aufeinanderfolgen-den Videobildern aufgenommenen Histogramme akkumuliert werden, und dass in Schritt (c) die Form der Maske angepasst wird, indem der Abstand zwischen den beiden Rahmenschenkeln an den Abstand zwischen den Maxima der Histogramme (32, 34) für die beiden Rahmenschenkel angepasst wird.

6. Verfahren nach Anspruch 5, **dadurch gekennzeichnet, dass** die Akkumulation nach dem Fading-Memory-Prinzip erfolgt.

7. Verfahren nach einem der vorstehenden Ansprüche, **dadurch gekennzeichnet, dass** das Nachführen der Maske (26, 36) in Schritt (b) dadurch erfolgt, dass die Maske in die Position bewegt wird, in der optimale Übereinstimmung zwischen dem Bildmerkmal und der Maske besteht.

8. Verfahren nach Anspruch 7, **dadurch gekennzeichnet, dass** man durch Vergleich der erreichten optimalen Übereinstimmung mit der maximal möglichen Übereinstimmung einen Gütefaktor (G) berechnet und ausgibt, der für die Verlässlichkeit des Ortungsergebnisses repräsentativ ist.

9. Vorrichtung zur Ortung und Verfolgung von Objekten von einem Kraftfahrzeug aus, mit einer Videokamera (48) und einem Radarsensor als zweitem Ortungssystem (50), **gekennzeichnet durch** ein Bildauswertungsmodul (54), das Signale von der Videokamera (48) und dem zweiten Ortungssystem (50) aufnimmt und in dem ein Verfahren nach einem der Ansprüche 1 bis 8 implementiert ist.

**Claims**

1. Method for locating and tracking objects (14) by electronic evaluation of a video image sequence on board a motor vehicle, having the following steps:

   - determining a search field (24) in the video image (10-1) with the aid of locating data which are obtained with the aid of another locating system (50), and
   - searching the search field (24) on a prescribed image feature (28), marked by characteristic structures, of the object (14),
   **characterized in that**:

   a) the search field (24) is searched by moving over the search field a blurred mask (26), corresponding to the image feature, which has a prescribed basic shape, until optimum correspondence between the image feature and the mask is established with the aid of a matching criterion,
   b) the mask (26) is tracked in the subsequent images (10-2, 10-3) of the video image sequence in accordance with the movement of the object (14), a test of high spatial resolution being carried out in the consecutive images of the video image sequence as to how the structures characteristic of the image feature are distributed spatially inside the mask, and the distributions found in the individual video images of the sequence being accumulated,
   c) the shape of the mask (26; 36) being adapted for the purpose of optimizing the correspondence with the accumulated distributions, and
   d) step (b) is repeated with the adapted mask (36).

2. Method according to Claim 1, **characterized in that** the mask (26) is scaled in step (a) as a function of the distance of the object (14) measured with the aid of the other locating system (50).

3. Method according to Claim 1 or 2, **characterized in that** step (a) is carried out consecutively with other masks (26, 42), and **in that** the transition to step (b) takes place only if a specific minimum measure of correspondence has been found for a mask.

4. Method according to one of the preceding claims, **characterized in that** the image feature (28) is a contour line of the object (14), **in that** the blurred mask (26) has the shape of a frame whose limbs have a width corresponding to the blurring, and **in that** the correspondence between the image feature (28) and the mask (26) is determined by calculating the video image as edge image and convoluting it with the mask.

5. Method according to Claim 4, **characterized in that** the mask (26) has at least two parallel frame limbs which are at a distance from one another in a coordinate direction x, **in that** in step (b) the accumulation of the image features is carried out at relatively high spatial resolution by virtue of the fact that the edge image is integrated over complete pixel columns in the two parallel frame limbs for each x-coordinate so as to obtain a histogram (32, 34) of the image feature as a function of the x-coordinate, and **in that** the histograms recorded in the consecutive video images are accumulated, and **in that** in step (c) the shape of the mask is adapted by adapting the distance between the two frame limbs to the distance between the maxima of the histograms (32, 34) for the two frame limbs.

6. Method according to Claim 5, **characterized in that** the accumulation takes place according to the fading memory principle.

7. Method according to one of the preceding claims, **characterized in that** the tracking of the mask (26, 36) in step (b) is carried out by virtue of the fact that the mask is moved into the position in which there is optimum correspondence between the image feature and the mask.

8. Method according to Claim 7, **characterized in that** a quality factor (G) which is representative of the reliability of the locating result is calculated and output by comparing the optimum correspondence achieved with the maximum possible correspondence.

9. Device for locating and tracking objects from a motor vehicle, having a video camera (48) and a radar sensor as second locating system (50), **characterized by** an image evaluation module (54) which receives signals from the video camera (48) and the second locating system (50), and in which a method according to one of Claims 1 to 8 is implemented.

**Revendications**

1. Procédé de localisation et de suivi d'objets (14) par interprétation électronique d'une séquence d'images vidéo à bord d'un véhicule automobile, comprenant les étapes suivantes :

   - détermination d'un champ de recherche (24) dans l'image vidéo (10-1) au moyen de données de localisation qui sont obtenues avec un autre système de localisation (50) et
   - examen du champ de recherche (24) pour y trouver une caractéristique d'image (28) prédéfinie de l'objet (14), **caractérisée par** des structures caractéristiques, **caractérisé en ce que** :

   a) le champ de recherche (24) est examiné en déplaçant au-dessus du champ de recherche un masque non net (26) correspondant à la caractéristique d'image et présentant une forme de base prédéfinie jusqu'à ce qu'une concordance optimale entre la caractéristique d'image et le masque soit constatée au moyen d'un critère de concordance,
   b) le masque (26) est poursuivi dans les images suivantes (10-2, 10-3) de la séquence d'images vidéo en fonction du mouvement de l'objet (14), un contrôle étant effectué avec une résolution dans l'espace plus élevée dans les images successives de la séquence d'images vidéo pour vérifier comment les structures caractéristiques de la caractéristique d'image sont distribuées dans l'espace à l'intérieur du masque et les distributions trouvées dans les images vidéo individuelles de la séquence étant cumulées,
   c) la forme du masque (26, 36) étant adaptée en fonction des distributions cumulées dans le sens d'une optimisation de la concordance et
   d) l'étape (b) est répétée avec le masque adapté (36).

2. Procédé selon la revendication 1, **caractérisé en ce que** dans l'étape (a), le masque (26) est mis à l'échelle en fonction de la distance de l'objet (14) mesurée à l'aide de l'autre système de localisation (50).

3. Procédé selon la revendication 1 ou 2, **caractérisé en ce que** l'étape (a) est exécutée successivement avec plusieurs masques (26, 42) et **en ce que** la transition vers l'étape (b) n'a lieu que lorsqu'un niveau de concordance minimum donné a été trouvé pour un masque.

4. Procédé selon l'une des revendications précédentes, **caractérisé en ce que** la caractéristique d'image (28) est une ligne de contour de l'objet (14), **en ce que** le masque non net (26) présente la forme d'un cadre dont les branches ont une largeur correspondant au flou et **en ce que** la concordance entre la caractéristique d'image (28) et le masque (26) est déterminée en calculant l'image vidéo en tant qu'image de bord et en la pliant avec le masque.

5. Procédé selon la revendication 4, **caractérisé en ce que** le masque (26) possède au moins deux branches de cadre parallèles qui se trouvent à une certaine distance l'une de l'autre dans une direction de coordonnées x, **en ce que** dans l'étape (b), le cumul des caractéristiques d'image avec une résolution dans l'espace plus élevée est effectué **en ce que** dans les deux branches de cadre parallèles, l'image de bord est intégrée sur des colonnes de pixels complètes pour chaque coordonnée x de manière à obtenir un histogramme (32, 34) de la caractéristique d'image en fonction de la coordonnée x, et **en ce que** les histogrammes enregistrés dans les images vidéo successives sont cumulés, et **en ce que** dans l'étape (c), la forme du masque est adaptée du fait que l'écart entre les deux branches de cadre est adapté à l'écart entre les maximas des histogrammes (32, 34) pour les deux branches de cadre.

6. Procédé selon la revendication 5, **caractérisé en ce que** le cumul est effectué selon le principe de la mémoire à évanouissement.

7. Procédé selon l'une des revendications précédentes, **caractérisé en ce que** la poursuite du masque (26, 36) à l'étape (b) est effectuée **en ce que** le masque est déplacé dans la position dans laquelle il existe une concordance optimale entre la caractéristique d'image et le masque.

8. Procédé selon la revendication 7, **caractérisé en ce qu'**un facteur de qualité (G) représentatif de la fiabilité du résultat de la localisation est calculé et délivré en comparant la concordance optimale obtenue avec la concordance maximale possible.

9. Dispositif de localisation et de suivi d'objets depuis un véhicule automobile, comprenant une caméra vidéo (48) et un capteur radar comme deuxième système de localisation (50), **caractérisé par** un module d'interprétation d'image (54) qui enregistre les signaux de la caméra vidéo (48) et du deuxième système de localisation (50) et dans lequel est mis en oeuvre un procédé selon l'une des revendications 1 à 8.

*Fig. 1*

*Fig. 2*

*Fig. 3*

**Fig. 4**

10-3

**Fig. 5**

42

**Fig. 6**

46

**Fig. 7**

50

48

Bildauswertungs-modul

54

ACC-Modul

52

*Fig. 8*

56

S1 — neues Objekt? ⟶ N

J

Tracking-Prozedur T starten

S2

T

Bestimme Suchfeld — S10

Masken skalieren und Durchprobieren — S11

Objekt verwerfen ⟶ N — gültige Maske gefunden? — S12

S13

J

Akkumulieren und Nachführen

S14

Maske anpassen

S15

Ort, Breite, Höhe und Güte (G) ausgeben

S16

**IN DER BESCHREIBUNG AUFGEFÜHRTE DOKUMENTE**

**In der Beschreibung aufgeführte Patentdokumente**

- WO 9915406 A
- EP 1126414 A
- US 20010031068 A
- WO 03001472 A

**In der Beschreibung aufgeführte Nicht-Patentliteratur**

- Radar und Vision Data Fusion for Hybride Adaptive Cruise Control on Highways. **HOFMAN ; RIEDER ; DICKMANNS.** Radar und Vision Data Fusion for Hybride Adaptive Cruise Control on Highways. Universität der Bundeswehr, 2001, vol. 2095, 125-138
- **B.SCHIELE ; G. SAGERER.** ICVS 2001, LNCS. Springer-Verlag, vol. 2095, 125-138
- Robust car tracking using Kalman filtering and Bayesian templates. **FRANK DELLAERT ; C. THORPE.** Robust car tracking using Kalman filtering and Bayesian templates. Carnegie Mellon University